# EUROPEAN PATENT APPLICATION

(11) **EP 3 847 998 A1**
(43) Date of publication of application: **14.07.2021**
(21) Application number: 20216375.4
(22) Date of filing: 22.12.2020
(51) Int. Cl.: A61C 15/04

(54) **DENTAL FLOSS STICK**

(30) Priority: 08.01.2020 CN 202020029692 U
(71) Applicant: Li, Peng, Beijing (CN)
(72) Inventor: Li, Peng, Beijing (CN)
(74) Representative: Cabinet Chaillot

(57) **Abstract**

The invention discloses a dental floss stick, comprising an upper piece and a lower piece, wherein both the upper piece and the lower piece are U-shaped; the top of both ends of the opening of the upper piece and the top of both ends of the opening of the lower piece (are rotatably connected; the upper part of both ends of the opening of the upper piece is provided with a bulge, and the upper part of both ends of the opening of the lower piece is provided with a groove corresponding to the bulge; the middle part of the upper piece is provided with a female buckle, and the middle part of the lower piece is provided with a male buckle matching the female buckle; the upper part of both ends of the opening of the upper piece is provided with a dental floss; the dental floss is wound on the upper piece, and the winding place of the dental floss and the upper piece is located on the upper side of the bulge; the upper part of either end of the opening of the lower piece is provided with a blade; the blade is located at the groove, and the blade has the function of cutting the dental floss; the middle part of the upper piece is provided with a handle. The invention has simple structure and convenient use. It is convenient to replace dental flosses, which avoids waste of dental floss sticks, and has high practical value and promotion value.

## Description

### FIELD OF THE INVENTION

The invention relates to the field of oral care, in particular to a dental floss stick.

### BACKGROUND OF THE RELATED ART

Dental floss stick, also known as dental floss pick, is a product used with toothbrush in daily oral care. Before dental floss sticks, people used dental floss to achieve the same effect. Compared with dental floss, dental floss stick has the advantages of more convenience, efficiency, safety and hygiene.

Toothbrushes can only brush 70% of the surface of the teeth. Dental floss makes up for the shortcomings of toothbrushes, which is a household tooth protection product commonly used in Europe and the United States today. This product can be used as toothpicks and dental floss.

Traditional dental floss sticks are disposable products, and the dental floss sticks are thrown away as garbage after one use, which will result in a lot of waste of dental floss sticks.

### SUMMARY OF THE INVENTION

The technical problem to be solved by the invention is to overcome the defects of the above technique and provide a dental floss stick.

In order to solve the technical problems, the technical solution provided by the invention is a dental floss stick, comprising an upper piece and a lower piece, wherein both the upper piece and the lower piece are U-shaped; the top of both ends of the opening of the upper piece and the top of both ends of the opening of the lower piece are rotatably connected; the upper part of both ends of the opening of the upper piece is provided with a bulge, and the upper part of both ends of the opening of the lower piece is provided with a groove corresponding to the bulge;

the middle part of the upper piece is provided with a female buckle, and the middle part of the lower piece is provided with a male buckle matching the female buckle;

the upper part of both ends of the opening of the upper piece is provided with a dental floss; the dental floss is wound on the upper piece, and the winding place of the dental floss and the upper piece is located on the upper side of the bulge;

the upper part of either end of the opening of the lower piece is provided with a blade; the blade is located at the groove, and the blade has the function of cutting the dental floss;

the middle part of the upper piece is provided with a handle.

As an improvement, the blade is located outside the lower piece.

As an improvement, the width of the blade increases linearly from the rotating joint between the upper piece and the lower piece to the other end.

As an improvement, the blade and the lower piece are connected and fixed by threads.

As an improvement, the material of the blade is carbon steel.

As an improvement, the middle part of the lower piece is provided with a wrench.

As an improvement, the material of the dental floss is high molecular weight polyethylene fiber.

As an improvement, the material of the upper piece is food-grade plastic.

As an improvement, the material of the lower piece is food-grade plastic.

Compared with the prior art, the invention has the advantages of simple structure and convenient use. It is convenient to replace dental flosses, which avoids waste of dental floss sticks, and has high practical value and promotion value.

### BRIEF DESCRIPTION OF THE DRAWINGS

FIG. 1 is a schematic diagram of the first structure of the dental floss stick of the invention.
FIG. 2 is a schematic diagram of the second structure of the dental floss stick of the invention.
FIG. 3 is a front view of the dental floss stick of the invention.
FIG. 4 is an enlarged view of A in Figure 1.
FIG. 5 is an enlarged view of A in Figure 2.
FIG. 6 is a schematic diagram of the dental floss stick of the invention in a retracted state.

As shown in the figures: 1 refers to the upper piece; 2 refers to the lower piece; 3 refers to the bulge; 4 refers to the groove; 5 refers to the female buckle; 6 refers to the male buckle; 7 refers to the dental floss; 8 refers to the blade; 9 refers to the handle; 10 refers to the wrench.

### DETAILED DESCRIPTION OF THE PREFERRED EMBODIMENTS

The invention will be further described in detail hereinafter with reference to the drawings.

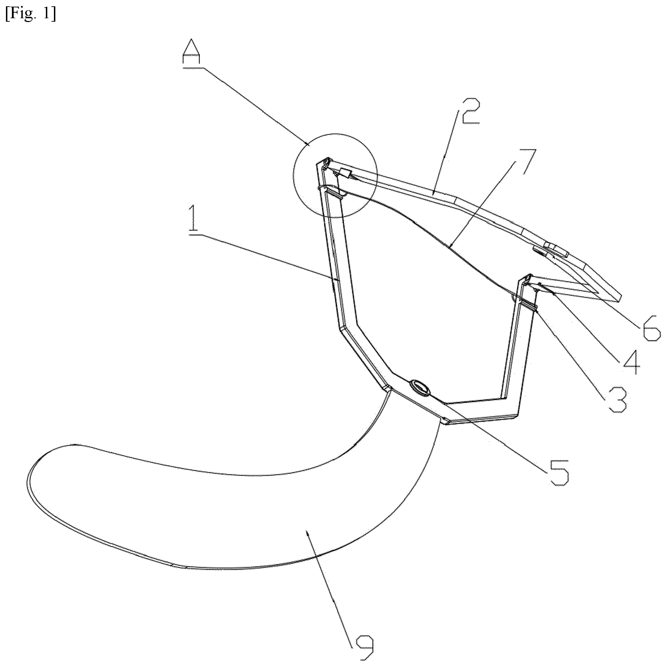

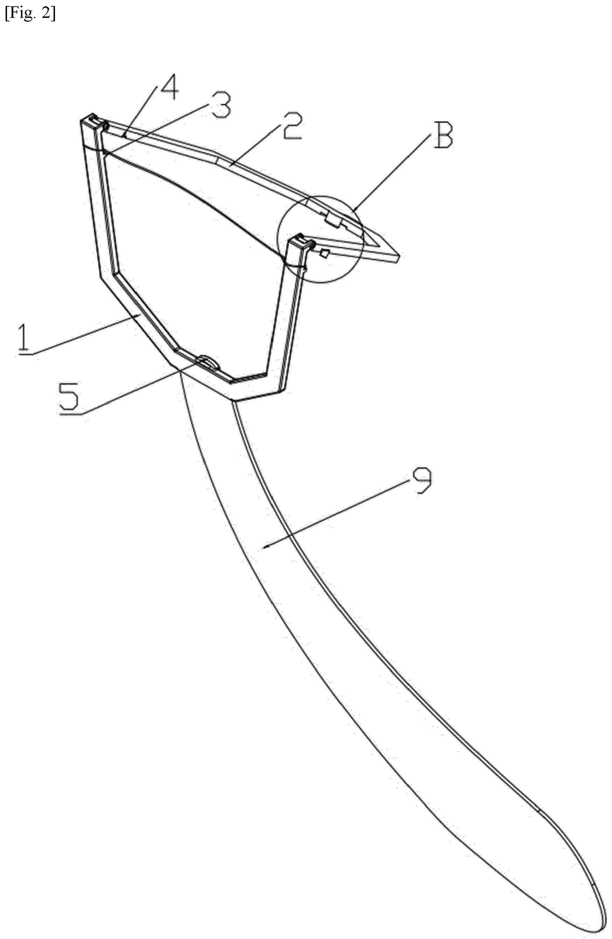

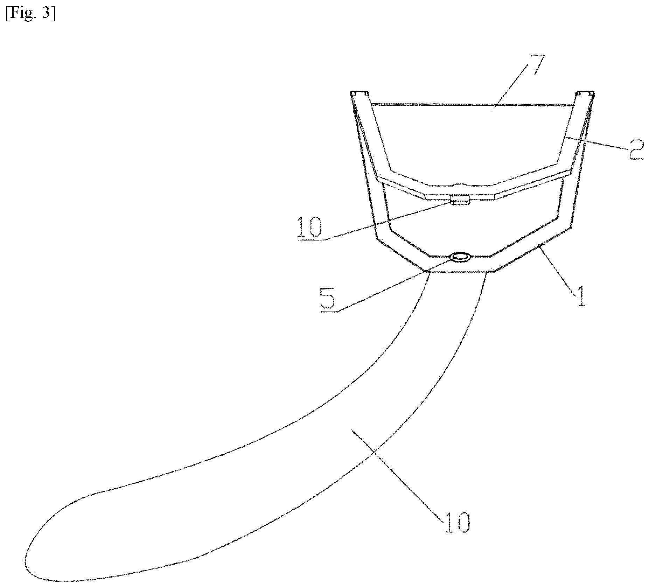

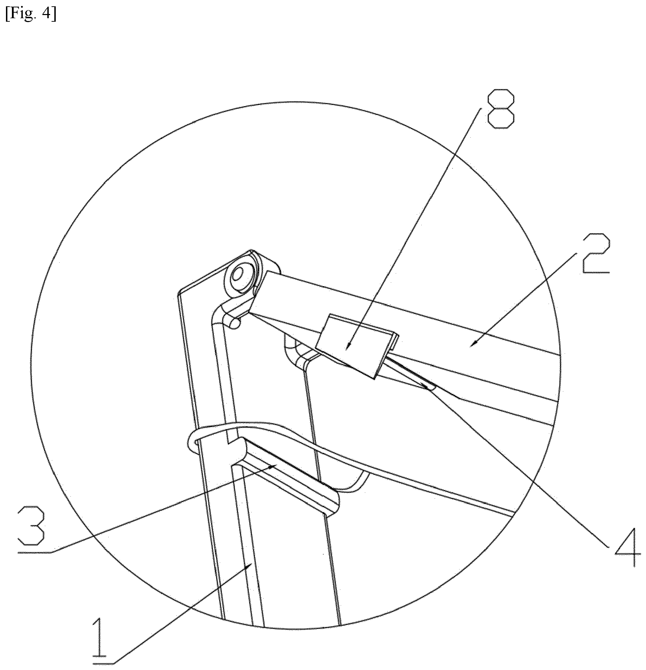

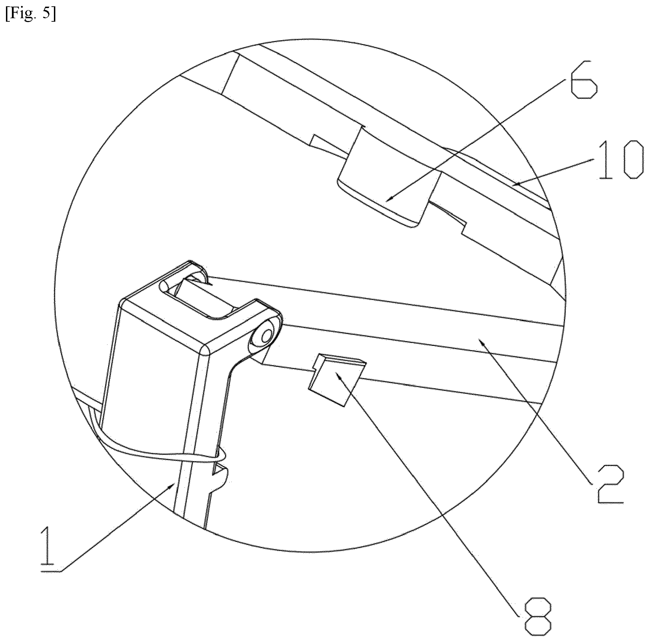

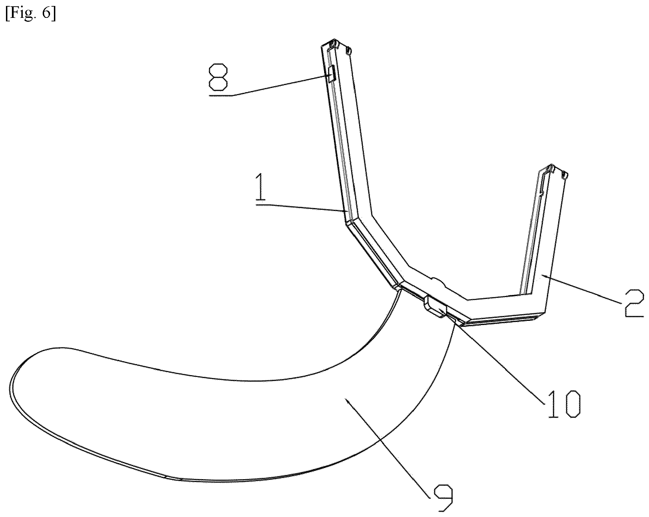

With reference to FIG. 1-6, a dental floss stick, comprising an upper piece 1 and a lower piece 2, wherein both the upper piece 1 and the lower piece 2 are U-shaped; the top of both ends of the opening of the upper piece 1 and the top of both ends of the opening of the lower piece 2 are rotatably connected; the upper part of both ends of the opening of the upper piece 1 is provided with a bulge 3, and the upper part of both ends of the opening of the lower piece 2 is provided with a groove 4 corresponding to the bulge 3;
the middle part of the upper piece 1 is provided with a female buckle 5, and the middle part of the lower piece 2 is provided with a male buckle 6 matching the female buckle 5;
the upper part of both ends of the opening of the upper piece 1 is provided with a dental floss 7; the dental floss 7 is wound on the upper piece 1, and the winding place of the dental floss 7 and the upper piece 1 is located on the upper side of the bulge 3;
the upper part of either end of the opening of the lower piece 2 is provided with a blade 8; the blade 8 is located at the groove 4, and the blade 8 has the function of cutting the dental floss 7;
the middle part of the upper piece 1 is provided with a handle 9.

The blade (8) is located outside the lower piece 2.

The width of the blade 8 increases linearly from the rotating joint between the upper piece 1 and the lower piece 2 to the other end.

The blade 8 and the lower piece 2 are connected and fixed by threads.

The material of the blade 8 is carbon steel.

The middle part of the lower piece 2 is provided with a wrench 10.

The material of the dental floss 7 is high molecular weight polyethylene fiber.

The material of the upper piece 1 is food-grade plastic.

The material of the lower piece 2 is food-grade plastic.

When the invention is implemented in specific use, the dental floss 7 can be tied to the upper piece 1, and the dental floss stick is used normally.

When the dental floss stick is used up, rotate the lower piece 2 and when the lower piece 2 rotates, the blade 8 will also rotate, and then the dental floss 7 tied to the upper piece 1 is cut off. It is convenient to remove the dental floss 7 from the lower piece 2.

After removing the dental floss 7, when not in use, turn the lower piece 2 to overlap the upper piece 1; at this time, the bulge 3 at the upper part of both ends of the opening of the upper piece 1 and the groove 4 at the upper part of both ends of the opening of the lower piece 2 are matched. The male buckle 6 and the female buckle 5 cooperate to prevent the lower piece 2 and the upper piece 1 from rotating.

When using it again, use your fingers to squeeze the wrench 10, the lower piece 2 and the upper piece 1 will rotate, and the male buckle 6 and the female buckle 5 will separate; then tie the dental floss 7 to the upper piece 1, and the blade edge of the blade 8 is attached to the dental floss 7, so it can be used normally.

The invention has simple structure and convenient use. It is convenient to replace dental flosses, which avoids waste of dental floss sticks, and has high practical value and promotion value.

The invention and its embodiments are described hereinabove, and the description is not restrictive. What is shown in the drawings is only one of the embodiments of the invention and the actual structure is not limited thereto. All in all, structural modes and embodiments similar to the technical solution without deviating from the inventive purpose of the invention made by those of ordinary skill in the art without creative design shall all fall within the protection scope of the invention.

## Claims

1. A dental floss stick, comprising an upper piece (1) and a lower piece (2), wherein both the upper piece (1) and the lower piece (2) are U-shaped; the top of both ends of the opening of the upper piece (1) and the top of both ends of the opening of the lower piece (2) are rotatably connected; the upper part of both ends of the opening of the upper piece (1) is provided with a bulge (3), and the upper part of both ends of the opening of the lower piece (2) is provided with a groove (4) corresponding to the bulge (3);
the middle part of the upper piece (1) is provided with a female buckle (5), and the middle part of the lower piece (2) is provided with a male buckle (6) matching the female buckle (5);
the upper part of both ends of the opening of the upper piece (1) is provided with a dental floss (7); the dental floss (7) is wound on the upper piece (1), and the winding place of the dental floss (7) and the upper piece (1) is located on the upper side of the bulge (3);
the upper part of either end of the opening of the lower piece (2) is provided with a blade (8); the blade (8) is located at the groove (4), and the blade (8) has the function of cutting the dental floss (7);
the middle part of the upper piece (1) is provided with a handle (9).

2. The dental floss stick according to claim 1, wherein the blade (8) is located outside the lower piece (2).

3. The dental floss stick according to claim 2, wherein the width of the blade (8) increases linearly from the rotating joint between the upper piece (1) and the lower piece (2) to the other end.

4. The dental floss stick according to claim 1, wherein the blade (8) and the lower piece (2) are connected and fixed by threads.

5. The dental floss stick according to claim 1, wherein the material of the blade (8) is carbon steel.

6. The dental floss stick according to claim 1, wherein the middle part of the lower piece (2) is provided with a wrench (10).

7. The dental floss stick according to claim 1, wherein the material of the dental floss (7) is high molecular weight polyethylene fiber.

8. The dental floss stick according to claim 1, wherein the material of the upper piece (1) is food-grade plastic.

9. The dental floss stick according to claim 1, wherein the material of the lower piece (2) is food-grade plastic.
